# EUROPÄISCHE PATENTANMELDUNG

(11) **EP 3 929 372 A1**
(43) Veröffentlichungstag der Anmeldung: **29.12.2021**
(21) Anmeldenummer: 21178511.8
(22) Anmeldetag: 09.06.2021
(51) Int. Cl.: E04D 13/00, G01M 3/00

(54) **VERFAHREN UND SYSTEM ZUR ÜBERWACHUNG EINES BAUKÖRPERS**

(30) Priorität: 25.06.2020 DE 102020003798
(71) Anmelder: Ewald Dörken AG, 58313 Herdecke (DE)
(72) Erfinder: Dahms, Severin, 44229 Dortmund (DE)
(74) Vertreter: Weidener, Jörg Michael

(57) **Zusammenfassung**

Die Erfindung betrifft ein Verfahren zur Überwachung eines Baukörpers (1), vorzugsweise eines Dachaufbaus (2) oder einer Nasszelle (3), mittels einer Messeinrichtung (4) zur Messung wenigstens einer Messgröße. Erfindungsgemäß ist vorgesehen, dass eine Überwachungseinrichtung (7) wenigstens eine Überwachungsgröße überwacht, insbesondere empfängt und/oder misst und/oder berechnet, und dass bei Erfassung einer vorgegebenen Überwachungsgröße die Messeinrichtung (4) für einen vorgegebenen Zeitraum aktiviert und/oder von einem ersten Systemmodus in einen sich von dem ersten Systemmodus unterscheidenden weiteren Systemmodus überführt wird, insbesondere wobei die Messeinrichtung (4) außerhalb des vorgegebenen Zeitraums deaktiviert ist.

## Beschreibung

Die Erfindung betrifft ein Verfahren zur Überwachung eines Baukörpers, vorzugsweise eines Dachaufbaus oder einer Nasszelle, mittels einer Messeinrichtung zur Messung wenigstens einer Messgröße. Des Weiteren betrifft die vorliegende Erfindung ein System zur Überwachung eines Baukörpers, vorzugsweise eines Dachaufbaus oder einer Nasszelle, insbesondere zur Durchführung eines Verfahrens der vorgenannten Art, wobei das System eine Messeinrichtung zur Messung wenigstens einer Messgröße aufweist.

Unter dem Begriff "Baukörper" wird im Rahmen der vorliegenden Erfindung ein Bauwerk oder ein Teil eines Bauwerks verstanden, wobei verfahrensgemäß wenigstens ein chemischer und/oder physikalischer Wert des Baukörpers als Messgröße überwacht wird. Dieser Wert bzw. diese Messgröße kann einen Zustand, insbesondere der Bausubstanz des Baukörpers, angeben.

Unter einer Nasszelle wird im Rahmen der vorliegenden Erfindung letztlich insbesondere ein Nassbereich und/oder ein Raum in einer Wohnung, einem Gebäude, oder dergleichen verstanden, in dem Wasserleitungen liegen. Beispielsweise kann ein Badezimmer und/oder eine Dusche als Nasszelle angesehen werden.

In der Praxis ist die Überwachung von Baukörpern mit einem großen Aufwand verbunden, da die zur Überwachung eingesetzten Messeinrichtungen in der Regel als passive Messeinrichtungen ausgebildet sind, die zur Messung von außen zugeführte elektrische Energie benötigen. Beispielsweise ist es im Stand der Technik bekannt, einen Feuchtesensor im Dachaufbau einzusetzen, der über eine Batterie bzw. einen Akkumulator mit elektrischer Energie versorgt wird. Aufgrund des Messprinzips ist ein häufiger Austausch der Energieversorgungseinrichtungen, die zur elektrischen Energieversorgung der Messeinrichtung genutzt werden, erforderlich. Zudem erfolgt im Stand der Technik eine kontinuierliche Auswertung der erfassten Messergebnisse, was sowohl mit einem hohen Energiebedarf als auch mit einer verkürzten Lebensdauer des gesamten Systems verknüpft ist. Darüber hinaus muss ein kontinuierlicher Austausch der Akkumulatoren, die zur Energieversorgung der Messeinrichtung benötigt werden, erfolgen, was ebenfalls mit hohen Betriebs- und Wartungskosten verbunden ist.

Unter Berücksichtigung des Kosten-Nutzen-Aspektes wird häufig von einer Überwachung eines Baukörpers im Stand der Technik abgesehen, was jedoch durchaus ein Problem darstellen kann. So kann beispielsweise ein entstehender Schaden zu spät erfasst werden. Beispielsweise kann ein aufgrund eines Lecks hervorgerufener Wasserschaden im Bereich einer Nasszelle und/oder eines Dachaufbaus zu spät erkannt werden, was hohe Folgekosten nach sich ziehen kann. Diese Kosten werden jedoch im Hinblick auf die für die Überwachung benötigten Kosten und den diesbezüglichen Aufwand "in Kauf" genommen.

Aufgabe der vorliegenden Erfindung ist es nun, ein Verfahren zur Überwachung bzw. eine Vorrichtung zur Überwachung eines Baukörpers bereitzustellen, bei dem bzw. der die vorgenannten Nachteile vermieden oder aber zumindest im Wesentlichen reduziert werden. Insbesondere ist es die Aufgabe der vorliegenden Erfindung, ein wirtschaftliches, effizientes Verfahren bzw. eine diesbezügliche Vorrichtung zur Überwachung eines Baukörpers bereitzustellen.

Die vorgenannte Aufgabe wird erfindungsgemäß bei einem Verfahren der eingangs genannten Art zumindest im Wesentlichen dadurch gelöst, dass eine Überwachungseinrichtung wenigstens eine Überwachungsgröße überwacht, insbesondere empfängt und/oder misst und/oder berechnet.

Erfindungsgemäß ist vorgesehen, dass bei Erfassung einer vorgegebenen Überwachungsgröße die Messeinrichtung für einen vorgegebenen Zeitraum aktiviert wird, insbesondere wobei die Messeinrichtung außerhalb des vorgegebenen Zeitraum deaktiviert ist.

Alternativ oder zusätzlich kann erfindungsgemäß vorgesehen sein, dass bei Erfassung einer vorgegebenen Überwachungsgröße die Messeinrichtung von einem ersten Systemmodus in einen sich von dem ersten Systemmodus unterscheidenden weiteren Systemmodus überführt wird.

Ein Systemmodus kann auch als sogenannter Betriebsmodus bezeichnet werden. In einem Betriebsmodus bzw. Systemmodus können insbesondere die Messzeitpunkte - d.h. zu welchen Zeitpunkten eine Messung der wenigstens einen Messgrößer durchgeführt wird - und/oder die vorgegebenen Zeiträume für die Messung der wenigstens der wenigstens einen Messgröße und/oder die Anzahl der in einem bestimmten Zeitintervall durchzuführenden Messungen vorbestimmt und/oder festgelegt sein. Bei einem Wechsel des Systemmodus kann beispielsweise die Messeinrichtung in einem vorgegebenen Zeitintervall, wie beispielsweise einem Tag, statt 1-mal 3-mal die wenigstens eine Messgröße messen. Vorzugsweise wird so ein angepasster Betrieb der Messeinrichtung gewährleistet, insbesondere unter Berücksichtigung der vorgegebenen Überwachungsgröße, die wiederrum zu einem Ereignis, wie einem Regenschauer, verknüpft sein kann. Der angepasste Betriebsmodus kann demzufolge von durch die vorgegebene Überwachungsgröße erkennbaren Ereignissen beeinflusst werden.

Erfindungsgemäß kann die Überwachungseinrichtung die vorgegebene Überwachungsgröße erfassen, messen, ermitteln und/oder empfangen und/oder berechnen. So kann die vorgegebene Überwachungsgröße auch ein "Aktivierungssignal" sein, das insbesondere keiner weiteren Verarbeitung bedarf.

Alternativ oder zusätzlich kann die Überwachungseinrichtung oder eine weitere Einrichtung die vorgegebene Überwachungsgröße durch einen Vergleich mit in ihr hinterlegten Vorgabewerten ermitteln - das heißt eine Verarbeitung der Überwachungsgröße kann durchgeführt werden.

Letztlich wird erfindungsgemäß insbesondere ermöglicht, dass die Messeinrichtung lediglich für einen vorgegebenen in der Regel kurzen Zeitraum aktiviert ist und insbesondere auch nur in diesem vorgegebenen Zeitraum mit elektrischer Energie versorgt wird. So wird erfindungsgemäß die Möglichkeit geschaffen, die Betriebskosten bei einem erfindungsgemäßen Verfahren zu reduzieren, insbesondere indem die Messung der wenigstens einen Messgröße in Abhängigkeit einer bestimmten Überwachungsgröße durchgeführt wird. So kann eine Messung ziel- und zweckgerichtet zu insbesondere solchen Momenten bzw. zu solchen Ereignissen erfolgen, bei denen eine Messung besonders wesentlich, notwendig und/oder erforderlich ist.

Auch kann durch die vorgegebene Überwachungsgröße ein Initiierungs- bzw. Aktivierungssignal zum Start einer Messung vorgegeben werden.

Als Überwachungsgröße können insbesondere innere und/oder äußere Umgebungsparameter des Baukörpers, wie beispielsweise die Temperatur, Feuchte oder dergleichen dienen.

Ferner kann die vorgegebene Überwachungsgröße insbesondere als Aktivierungssignal zur Aktivierung der Messeinrichtung dienen.

Erfindungsgemäß gelingt es, insbesondere eine intelligente und/oder aktive Anpassung der Mess-Zeiträume der Messeinrichtung zu ermöglichen. So kann die Messeinrichtung insbesondere in ihrer Lebensdauer gegenüber dauerhaft betriebenen Messeinrichtungen verlängert werden.

Erfindungsgemäß versteht es sich, dass auch die Messeinrichtung als Überwachungseinrichtung ausgebildet sein und neben der Messgröße auch die Überwachungsgröße überwachen, insbesondere empfangen und/oder messen, kann. Die Überwachungseinrichtung kann alternativ oder zusätzlich auch als externe Einrichtung ausgebildet sein, die ferner auch nicht zwingend im Baukörper und/oder am Baukörper angeordnet sein muss. Beispielsweise kann als Überwachungseinrichtung eine externe Wetterstation vorgesehen sein.

Bevorzugt ist erfindungsgemäß vorgesehen, dass die Überwachungseinrichtung und/oder die Messeinrichtung am und/oder im Baukörper, vorzugsweise am und/oder im Dachaufbau oder an und/oder in einer Nasszelle, angeordnet ist.

Insbesondere wird erfindungsgemäß eine intelligente Steuerung der Messung durch die Messeinrichtung gewährleistet, insbesondere wobei die Messeinrichtung in dem Baukörper integrierte und/oder eingebaute Sensoren aufweist.

Die Erfindung ermöglicht zum einen, ein Verfahren bereitzustellen, das eine energiesparende Messung ermöglicht. Im Stand der Technik ist eine energiesparende Messung nur dann möglich, wenn eine möglichst geringe Anzahl von Messungen durchgeführt wird. Dies kann im Stand der Technik jedoch dazu führen, dass kritische Ereignisse zu spät erkannt werden. Erfindungsgemäß wird jedoch ermöglicht, dass bei einer energiesparenden Messung gleichzeitig ein kritisches Ereignis schnell erkannt werden kann - ohne hierfür eine hohe Anzahl von Messungen zu benötigen. Die Messungen können erfindungsgemäß auf Zeitpunkte begrenzt werden, an denen insbesondere kritische Ereignisse eintreten oder der Zustand eines Baukörpers einer engmaschigeren Überwachung und/oder einer Überprüfung bedarf. Folglich ist erfindungsgemäß ein Überprüfungsverfahren entwickelt worden, das nicht nur energiesparend, sondern auch zuverlässig, effizient und wirtschaftlich durchgeführt werden kann. Ein festes, vorgegebenes Schema für die einzelnen durchzuführenden Messungen wird insbesondere nicht benötigt, da der Zeitpunkt für die Aktivierung durch eine Überwachungsgröße - die letztlich ein kritisches Ereignis angeben kann oder mit einem solchen in Zusammenhang steht - vorgegeben wird.

Durch die Überwachungsgröße können somit weitere Informationen für die Baukörperüberwachung genutzt werden, so dass eine Aktivierung der Messeinrichtung und/oder ein Wechsel des Systemmodus insbesondere dann erfolgen kann, wenn die Betriebs- und/oder Umgebungsbedingungen besonders kritisch sind und möglicherweise ein kritisches Ereignis - wie ein Gewitter oder dergleichen - auftreten kann. Bei solchen kritischen Ereignissen kann eine erhöhte Wahrscheinlichkeit vorliegen, dass insbesondere eine Undichtigkeit - beispielsweise ein Leck, durch das Wasser eintreten kann - am oder im Baukörper, insbesondere am oder im Dachaufbau und/oder an oder in der Nasszelle, festgestellt werden kann. Möglicherweise ist dieser Schaden auch vor dem kritischen Ereignis vorhanden gewesen, wobei der Schaden insbesondere erst bei oder nach einem kritischen Ereignis detektierbar ist. Ist beispielsweise ein Leck im Dachaufbau vorhanden, ist die Wahrscheinlichkeit der Feststellung eben jenes Lecks höher, wenn die Messeinrichtung während oder nach eines starken Regenschauers misst, als wenn die Messeinrichtung während einer Trockenperiode die Feuchtigkeit im Dachaufbau misst. Die bestimmte bzw. vorgegebene Überwachungsgröße kann also zeitlich versetzt zu einem bestimmten Ereignis, wie einem Regenschauer, liegen.

Die Feststellung, ob ein Regenschauer zu erwarten ist, kann durch eine Überwachungsgröße erfolgen. Beispielsweise kann von außen, insbesondere durch ein digitales Signal - das insbesondere aus dem Internet stammt -, der Überwachungseinrichtung die Überwachungsgröße übermittelt werden. Dieses Signal, das als Überwachungsgröße dienen kann, kann insbesondere ein Warnsignal sein. Dieses Warnsignal kann beispielsweise auf Wetterdaten oder dergleichen beruhen, die durch einen Wetterdienst ausgewertet werden.

Als Messeinrichtung ist insbesondere eine passive Messeinrichtung vorgesehen, die zur Durchführung der Messung von außen zugeführte Energie, insbesondere elektrische Energie, benötigt. Zur Messung der wenigstens einen Messgröße kann die Messeinrichtung dabei von einer Energieversorgungseinrichtung, insbesondere einem Akkumulator oder dergleichen, mit elektrischer Energie versorgt werden. Dabei kann die Messeinrichtung mit der Energieversorgungseinrichtung elektrisch leitend verbunden sein.

Vorzugsweise ist die Überwachungseinrichtung mit der Energieversorgungseinrichtung gekoppelt, so dass über die Energieversorgungseinrichtung die Messeinrichtung aktiviert und/oder deaktiviert wird. So kann über die der Messeinrichtung zugeführte Energie letztlich der Zeitraum festgelegt werden, in dem eine Messung durch die Messeinrichtung erfolgt.

Bei einer besonders bevorzugten Ausführungsform ist vorgesehen, dass in dem ersten und den weiteren Systemmodus wenigstens eine Messung der wenigstens einen Messgröße mittels der Messeinrichtung für einen vorgegebenen Zeitraum durchgeführt wird, wobei sich der erste Systemmodus von dem weiteren Systemmodus durch eine unterschiedliche Anzahl durchzuführender Messungen der wenigstens einen Messgröße in einem gleichen Zeitintervall und/oder durch unterschiedliche Zeiträume für die jeweils durchzuführenden Messungen der wenigstens einen Messgröße und/oder durch unterschiedliche vorgegebene Messzeitpunkte für die Messung der wenigstens einen Messgröße in einem gleichen Zeitintervall unterscheidet. Demzufolge kann insbesondere eine Anpassung des Systemmodus bzw. Betriebsmodus der Messeinrichtung erfolgen, so dass vorzugsweise das Messverhalten der Messeinrichtung optimiert werden kann.

Ferner wird bei einer weiteren bevorzugten Ausführungsform des Erfindungsgedankens die vorgegebene Überwachungsgröße durch Abgleich mit einem Überwachungsgrenzwert ermittelt. Insbesondere kann die Überwachungseinrichtung nach Erfassung, insbesondere Empfangen, der Überwachungsgröße überprüfen, ob die Überwachungsgröße einen Überwachungsgrenzwert überschreitet und/oder unterschreitet. Dies kann zur Ermittlung der vorgegebenen Überwachungsgröße überprüft werden. Bevorzugt kann beispielsweise so überprüft werden, ob die empfangene Überwachungsgröße in einem solchen Bereich liegt, der eine Aktivierung der Messeinrichtung erfordert.

Auch können alternativ oder zusätzlich in der Überwachungsgröße weitere Informationen enthalten sein, die beispielsweise zur Ermittlung genutzt werden können, ob die erfasste Überwachungsgröße die vorgegebene Überwachungsgröße darstellt. So kann beispielsweise die erfasste Überwachungsgröße - die der Überwachungseinrichtung übermittelt wird und/oder von dieser gemessen wird - als weitere Information eine Priorität, eine Uhrzeit oder dergleichen beinhalten.

Darüber hinaus ist bei einer weiteren bevorzugten Ausgestaltung des Erfindungsgedankens vorgesehen, dass eine Berechnung der Überwachungsgröße von der Überwachungseinrichtung mittels Algorithmen, insbesondere selbstlernende Algorithmen und/oder auf künstlicher Intelligenz basierender Algorithmen, durchgeführt wird. Insbesondere kann so während des Betriebs der Messeinrichtung bzw. der Überwachungseinrichtung intelligente Steuerung und weitere Verbesserung des gesamten Verfahrens erreicht werden.

Der selbstlernende Prozess kann insbesondere auf Basis von aus der Überwachungsgröße abgeleiteten Informationen erfolgen, die insbesondere durch Verarbeitung der Überwachungsgröße ermittelt werden können. Die Berechnung dieser abgeleiteten Information kann ferner ebenfalls mittels selbstlernender Algorithmen erfolgen.

Vorzugsweise ist die Überwachungseinrichtung und/oder die Messeinrichtung selbstlernend ausgebildet und weist dann eine selbstlernende Einrichtung mit künstlicher Intelligenz auf. Dies kann zur weiteren Optimierung dienen. So können die in dem vorgegebenen Zeitraum erfassten Messdaten und/oder die von der Überwachungseinrichtung erfassten Daten der Überwachungsgröße zur Optimierung genutzt werden. Beispielsweise kann so das erfindungsgemäße Verfahren nach dem vorgegebenen Zeitraum - beispielsweise nach einem Regenereignis - eine Selbstoptimierung vornehmen.

Bevorzugt wird die Messeinrichtung, insbesondere über die Energieversorgungseinrichtung, zumindest im Wesentlichen unmittelbar nach Erfassung der vorgegebenen Überwachungsgröße aktiviert. Alternativ oder zusätzlich kann auch vorgesehen sein, dass die Messeinrichtung, insbesondere über die Energieversorgungseinrichtung, mit einem Zeitversatz nach Erfassung der vorgegebenen Überwachungsgröße aktiviert wird. Der Zeitversatz kann größer 1 Minute, vorzugsweise größer 10 Minuten und insbesondere zwischen 30 Minuten und 6 Stunden betragen. Die Aktivierung kann insbesondere dann erfolgen, wenn die erfasste Überwachungsgröße einen Überwachungsgrenzwert überschreitet und/oder unterschreitet, so dass die erfasste Überwachungsgröße einer vorgegebenen Überwachungsgröße entspricht. Der Zeitversatz kann insbesondere durch die Überwachungseinrichtung und/oder die erfasste Überwachungsgröße und/oder durch die Messeinrichtung vorgegeben und/oder bestimmt werden. Alternativ oder zusätzlich kann auch vorgesehen sein, dass der Zeitversatz durch in der Energieversorgungseinrichtung hinterlegte Vorgaben bestimmt und/oder festgelegt wird. Insbesondere kann vorgesehen sein, dass zuvor die Messeinrichtung - also vor der Aktivierung - inaktiv gewesen ist. Ein inaktiver bzw. deaktivierter Zustand der Messeinrichtung kann beispielsweise dadurch hervorgerufen werden, dass die Messeinrichtung nicht mit elektrischer Energie versorgt wird.

Des Weiteren kann bei einer weiteren bevorzugten Ausführungsform vorgesehen sein, dass die Messeinrichtung, insbesondere über die Energieversorgungseinrichtung, nach Überschreiten des vorgegebenen Zeitraums zur Messung deaktiviert wird. Eine solche Deaktivierung kann beispielsweise - zumindest mittelbar - von der Überwachungseinrichtung vorgegeben werden. Auch kann ein von der Überwachungseinrichtung erfasstes, empfangenes und/oder gemessenes Deaktivierungssignal zur Beendigung des vorgegebenen Zeitraums der Messung der Messeinrichtung genutzt werden. Ein solches Deaktivierungssignal kann beispielsweise dann erfasst, empfangen und/oder gemessen werden, wenn ein kritisches Ereignis - das durch die vorgegebene Überwachungsgröße festgestellt worden ist - nicht mehr vorhanden ist. Somit kann die Messeinrichtung zumindest mittelbar über die Überwachungseinrichtung gesteuert werden, um so insbesondere eine energiesparende und effiziente Messung der Messgröße zu ermöglichen.

Ferner ist bei einer weiter bevorzugten Ausführungsform vorgesehen, dass die Messeinrichtung bei Überschreiten und/oder Unterschreiten eines vorgegebenen Deaktivierungsgrenzwertes der erfassten Überwachungsgröße, insbesondere über die Energieversorgungseinrichtung, deaktiviert wird. Die Überprüfung, ob ein Überschreiten und/oder Unterschreiten des Deaktivierungsgrenzwertes vorliegt, kann insbesondere von der Überwachungseinrichtung durchgeführt werden. Somit kann der vorgegebene Zeitraum beschränkt und/oder beendet werden.

Insbesondere kann der vorgegebene Zeitraum zur Aktivierung der Messeinrichtung durch in der Überwachungseinrichtung hinterlegte Vorgaben bestimmt, festgelegt und/oder ermittelt werden. Alternativ oder zusätzlich kann auch vorgesehen sein, dass der vorgegebene Zeitraum von der erfassten Überwachungsgröße, insbesondere der empfangenen Überwachungsgröße, die der vorgegebenen Überwachungsgröße entspricht, abhängig ist bzw. festgelegt wird.

Vorzugsweise wird die Überwachungsgröße von der Messeinrichtung an die Überwachungseinrichtung übermittelt. Dabei kann die Messeinrichtung insbesondere neben der wenigstens einen Messgröße auch die Überwachungsgröße erfassen, empfangen und/oder messen. Somit kann die, insbesondere im und/oder am Baukörper angeordnete, Messeinrichtung auch der Überwachungseinrichtung die Überwachungsgröße übermitteln. Insbesondere kann die Messeinrichtung die Überwachungseinrichtung aufweisen oder vice versa. In diesem Zusammenhang versteht es sich, dass die Messeinrichtung außerhalb des vorgegebenen Zeitraums insbesondere nur zur Messung der wenigstens einen Messgröße, nicht aber zur Messung, zum Empfangen und/oder zur Erfassung bzw. Überwachung der wenigstens einen Überwachungsgröße deaktiviert wird. Somit kann die zur Messung der wenigstens einen Messgröße deaktivierte Messeinrichtung weiterhin insbesondere die Überwachungsgröße überwachen. Die Überprüfung, ob die erfasste Überwachungsgröße einer vorgegebenen Überwachungsgröße entspricht, kann von der Messeinrichtung und/oder der Überwachungseinrichtung oder einer weiteren Einrichtung - das heißt also extern oder außerhalb der Messeinrichtung und/oder der Überwachungseinrichtung - durchgeführt werden.

Bei einer weiteren bevorzugten Ausführungsform ist vorgesehen, dass die Messeinrichtung und/oder die Überwachungseinrichtung als Überwachungsgröße mittels wenigstens eines Temperatursensors eine Temperatur misst. Der Temperatursensor kann insbesondere im und/oder am Baukörper angeordnet sein, insbesondere ist der Temperatursensor an der der Witterungsseite zugewandten Seite des Dachaufbaus angeordnet. Erfindungsgemäß ist festgestellt worden, dass über die Temperatur insbesondere auch ein Regenereignis bzw. ein Regenschauer vorhergesagt bzw. detektiert werden kann, da dieses in der Regel zuvor einen Temperatursturz hervorruft. Wenn beispielsweise die von der Überwachungseinrichtung erfasste Überwachungsgröße innerhalb eines vorgegebenen Zeitintervalls eine bestimmte Änderung erfährt, kann dies auch zur Vorgabe der vorgegebenen Überwachungsgröße führen. Beträgt beispielsweise der Temperaturabfall innerhalb eines vorgegebenen Zeitraums - beispielsweise innerhalb von einer Stunde - über 10 °C, kann die vorgegebene Überwachungsgröße mit einem Temperaturunterwert festgelegt werden. Insbesondere können auch selbstlernende Algorithmen zur Optimierung des Messverhaltens in der Überwachungseinrichtung und/oder der Messeinrichtung hinterlegt sein.

Alternativ oder zusätzlich kann auch vorgesehen sein, dass die vorgegebene Überwachungsgröße einen Temperaturgrenzwert darstellt, so dass beispielsweise die Messeinrichtung zu denjenigen Zeitpunkten misst, an denen sehr niedrige Temperaturen vorherrschen - beispielsweise in den Morgenstunden -, wo insbesondere eine Kondensation im Dachaufbau zu erwarten ist. Insbesondere kann die gemessene Information der Überwachungseinrichtung und/oder der Messeinrichtung zur Generierung der Überwachungsgröße auch weitere Informationen, wie beispielsweise die Uhrzeit, enthalten. So kann insbesondere die Temperatur von 10 °C in den Mittagsstunden zu einer Messung führen, nicht jedoch in der - zumeist ohnehin kalten - Nacht. So können auch weitere Informationen neben der tatsächlich gemessenen Größe zur Ermittlung der vorgegebenen Überwachungsgröße genutzt werden.

Bei einer weiteren besonders bevorzugten Ausführungsform der vorliegenden Erfindung überwacht die Überwachungseinrichtung wenigstens eine physikalische und/oder chemische Eigenschaft, die wiederum für die Überwachungsgröße genutzt wird. Dabei kann die Überwachungsgröße die gemessene und/oder überwachte physikalische und/oder chemische Eigenschaft sein und/oder neben der physikalischen und/oder chemischen Eigenschaft auch weitere Informationen, wie beispielsweise die Uhrzeit, weitere Messdaten oder dergleichen, umfassen.

Bei einer weiteren bevorzugten Ausführungsform ist die Überwachungseinrichtung als Wetterstation, die insbesondere einen Regensensor und/oder Temperatursensor und/oder einen Sensor zur Messung der Windstärke umfasst, ausgebildet. Alternativ oder zusätzlich kann auch vorgesehen sein, das die Überwachungseinrichtung von einem Wetterradar, dass insbesondere digital abrufbar ist, die Überwachungsgröße empfängt. Insbesondere kann die Überwachungseinrichtung derart ausgebildet sein, dass die erfassten Überwachungsgrößen die Umgebungsparameter des Baukörpers beinhalten.

Vorzugsweise ist als Überwachungsgröße eine Temperatur, ein Wasserverbrauch, ein Druck, insbesondere Wasserdruck, und/oder eine Feuchtigkeit vorgesehen. Insbesondere kann die Überwachungseinrichtung auch alternativ oder zusätzlich Daten zu einer Temperatur, einem Wasserverbrauch, einen Druck, insbesondere Wasserdruck, und/oder eine Feuchtigkeit umfassen.

Insbesondere kann die Erfassung des Wasserverbrauchs über einen Durchflusszähler ermittelt werden. So kann beispielsweise eine Messeinrichtung, die in einer Nasszelle angeordnet ist, jedenfalls dann messen, wenn ein hoher Wasserverbrauch innerhalb der Nasszelle vorliegt. Ebenfalls kann eine Druckmessung, insbesondere eine Messung des Wasserdruckes, Zeitpunkte feststellen, in denen ein hoher Wasserverbrauch vorliegt. Somit kann die Überwachungseinrichtung beispielsweise eine Wasseruhr aufweisen oder als solche ausgebildet sein.

Des Weiteren betrifft die vorliegenden Erfindung ein System zur Überwachung eines Baukörpers, vorzugsweise eines Dachaufbaus oder einer Nasszelle. Die Vorrichtung ist insbesondere zur Durchführung eines Verfahrens nach einem oder mehreren der vorhergehenden Ausführungsformen ausgebildet. Das System weist erfindungsgemäß eine Messeinrichtung zur Messung wenigstens einer Messgröße, die insbesondere zur Zustandsüberwachung des Baukörpers genutzt werden kann, auf. Erfindungsgemäß ist vorgesehen, dass eine Überwachungseinrichtung zur Überwachung, insbesondere zur Messung und/oder zum Empfang, wenigstens einer Überwachungsgröße vorgesehen ist und dass eine Steuereinrichtung des Systems zur Aktivierung der Messeinrichtung für einen vorgegebenen Zeitraum und/ oder zur Überführung der Messeinrichtung von einem ersten Systemmodus in einen sich von dem ersten Systemmodus unterscheidenden weiteren Systemmodus ausgebildet ist. Die Steuereinrichtung ist derart ausgebildet und insbesondere derart mit der Messeinrichtung und/oder der Überwachungseinrichtung gekoppelt, dass die Messeinrichtung nach Erfassung einer vorgegebenen Überwachungsgröße, die insbesondere von der Überwachungseinrichtung empfangen, erfasst und/oder gemessen wird, aktiviert wird und/oder von dem ersten Systemmodus in den weiteren Systemmodus überführt wird.

Die Steuereinrichtung kann Bestandteil der Überwachungseinrichtung sein oder separat von der Überwachungseinrichtung angeordnet und/oder betrieben werden. Letztlich ist die Steuereinrichtung zur Steuerung der Messeinrichtung vorgesehen. Sie kann in die Messeinrichtung integriert sein oder vice versa, es kann sich aber auch um eine separate Baugruppe handeln. Die von der Überwachungseinrichtung erfasste Überwachungsgröße kann den Zustand des Baukörpers referenzieren und/oder insbesondere ein kritisches Ereignis melden und/oder vorhersagen.

Im Hinblick auf bevorzugte Ausführungsformen darf insbesondere auf die vorstehenden Ausführungen zu dem erfindungsgemäßen Verfahren verwiesen werden, die in gleicher Weise auch für das erfindungsgemäße System gelten. In diesem Zusammenhang versteht es sich, dass die zuvor beschriebenen bevorzugten Ausführungsformen des Verfahrens auch in gleicher Weise auf das erfindungsgemäße System übertragbar sind.

Vorzugsweise ist die Steuereinrichtung jedenfalls auch zum Abgleich der von der Überwachungseinrichtung erfassten Überwachungsgröße und der vorgegebenen Überwachungsgröße ausgebildet. Beispielsweise kann die vorgegebene Überwachungsgröße in einem vorgegebenen Bereich der Überwachungsgröße liegen. So kann die Steuereinrichtung insbesondere derart ausgebildet sein, dass sie feststellt, ob die von der Überwachungseinrichtung erfasste, insbesondere empfangene und/oder gemessene, Überwachungsgröße derart ausgebildet ist, dass eine Aktivierung der Messeinrichtung erforderlich ist. Die Steuereinrichtung kann bei Auswertung der Überwachungsgröße auch weitere Informationen, wie die Uhrzeit, Messdaten von weiteren Einrichtungen oder dergleichen, berücksichtigen, so dass beispielsweise eine Feststellung auf die vorgegebene Überwachungsgröße nur unter wenigstens einer bestimmten Bedingung - beispielsweise in einem bestimmten Zeitrahmen - erfolgt.

Insbesondere kann die Steuereinrichtung derart ausgebildet sein, dass die von der Überwachungseinrichtung erfasste, insbesondere empfangene, Überwachungsgröße mit einem Überwachungsgrenzwert verglichen wird, so dass eine Überprüfung auf die vorgegebene Überwachungsgröße erfolgt. Bei einem Vergleich kann insbesondere überprüft werden, ob die erfasste Überwachungsgröße einen Grenzwert überschreitet und/oder unterschreitet. In Abhängigkeit der jeweiligen Vorgaben, die insbesondere individuell an unterschiedliche Vorrichtungen angepasst werden können, kann so überprüft werden, ob die Aktivierung der Messeinrichtung durchgeführt werden soll.

Vorzugsweise umfasst die Vorrichtung eine Energieversorgungseinrichtung zur Versorgung der Messeinrichtung mit elektrischer Energie. Die Steuereinrichtung kann derart mit der Energieversorgungseinrichtung gekoppelt sein, dass die von der Steuereinrichtung vorgegebene Aktivierung der Messeinrichtung über die Energieversorgungseinrichtung erfolgt. Als Energieversorgungseinrichtung kann insbesondere ein Akkumulator oder dergleichen vorgesehen sein, der bevorzugt elektrisch leitend mit der Messeinrichtung verbunden ist.

Die Messeinrichtung kann als passive Messeinrichtung ausgebildet sein, die zur Messung der wenigstens einen Messgröße elektrische Energie benötigt. Eine Aktivierung der Messeinrichtung kann dabei durch Energieversorgung der Messeinrichtung erfolgen. Wird die Messeinrichtung nicht mit Energie über die Energieversorgungseinrichtung versorgt, ist die Messeinrichtung deaktiviert.

Insbesondere kann die Messeinrichtung ein Kommunikationsmittel aufweisen, so dass die von der Messeinrichtung gemessenen Messdaten, vorzugsweise drahtlos, übertragbar sind. Das Kommunikationsmittel kann weiter derart ausgebildet sein, dass eine Kommunikation zwischen der Messeinrichtung und der Überwachungseinrichtung erfolgt, insbesondere wobei die Messeinrichtung neben der Messgröße auch zur Messung der wenigstens einen Überwachungsgröße ausgebildet sein kann. Dabei können die Daten der Überwachungsgröße insbesondere an die Überwachungseinrichtung mittels des Kommunikationsmittels übertragen werden.

Alternativ oder zusätzlich kann auch vorgesehen sein, dass die Energieversorgungseinrichtung ein weiteres Kommunikationsmittel umfasst, wobei das weitere Kommunikationsmittel derart ausgebildet sein kann, dass die Energieversorgungseinrichtung Steuerungssignale von der Steuereinrichtung und/oder der Überwachungseinrichtung empfangen kann, die insbesondere zur Aktivierung und/oder Deaktivierung der Messeinrichtung vorgesehen sind.

Auch kann die Überwachungseinrichtung eine Empfangseinrichtung zum Empfangen der wenigstens einen Überwachungsgröße und/oder eine Übertragungseinrichtung zur Übertragung der Überwachungsgröße an die Steuereinrichtung aufweisen. Auch die Steuereinrichtung kann solche Kommunikationsmittel zum Datenaustausch mit den weiteren Einrichtungen aufweisen.

Die Kommunikation zwischen der Steuereinrichtung und der Messeinrichtung, Energieversorgungseinrichtung und/oder Überwachungseinrichtung kann jeweils drahtlos und/oder drahtgebunden erfolgen. In Abhängigkeit der jeweiligen Anwendungssituation kann eine bestimmte Übertragungsart des Datenaustausches gewählt werden,

Die Empfangseinrichtung der Überwachungseinrichtung kann auch insbesondere derart ausgebildet sein, dass sie eine Schnittstelle umfasst, insbesondere eine Internet-Schnittstelle, die zum Empfangen der Überwachungsgröße ausgebildet ist. So können beispielsweise im Internet verfügbare Daten über das Wetter an die Überwachungseinrichtung übertragen und von dieser auch empfangen werden. Somit muss die Überwachungseinrichtung nicht zwingend zur Messung der Überwachungsgröße ausgebildet sein. Auch kann der Überwachungseinrichtung ein solches Signal der Überwachungsgröße übertragen werden, das zumindest im Wesentlichen unmittelbar oder zeitversetzt mit dem zuvor angegebenen zeitlichen Versatz zur Auslösung der Messung bzw. zur Aktivierung der Messeinrichtung führt.

Bei einer weiteren bevorzugten Ausführungsform ist vorgesehen, dass die Überwachungseinrichtung einen Temperatursensor, einen Regensensor, einen Feuchtesensor, einen Drucksensor, insbesondere einen Wasserdrucksensor, und/oder einen Durchflussmesser zur Ermittlung der Überwachungsgröße aufweist.

Alternativ oder zusätzlich kann vorgesehen sein, dass die Messeinrichtung zur Erfassung der wenigstens einen Messgröße einen Temperatursensor, Regensensor, Feuchtesensor und/oder Drucksensor oder dergleichen aufweist.

Vorzugsweise ist vorgesehen, dass die Messeinrichtung zur Messung der wenigstens einen Messgröße einen Feuchtesensor aufweist. Insbesondere ist der Feuchtesensor im Dachaufbau und/oder in der Nasszelle integriert, so dass insbesondere eine mögliche Undichtigkeit über die Messeinrichtung im Baukörper rechtzeitig erkannt werden kann.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, auch wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Darstellung eines erfindungsgemäßen Systems,
- Fig. 2: eine schematische Darstellung einer weiteren Ausführungsform des erfindungsgemäßen Systems,
- Fig. 3: eine schematische Darstellung des Ablaufes eines erfindungsgemäßen Verfahrens,
- Fig. 4: eine schematische perspektivische Darstellung eines Baukörpers,
- Fig. 5: eine schematische perspektivische Darstellung einer weiteren Ausführungsform des erfindungsgemäßen Baukörpers und
- Fig. 6: eine schematische perspektivische Darstellung einer weiteren Ausführungsform des erfindungsgemäßen Baukörpers.

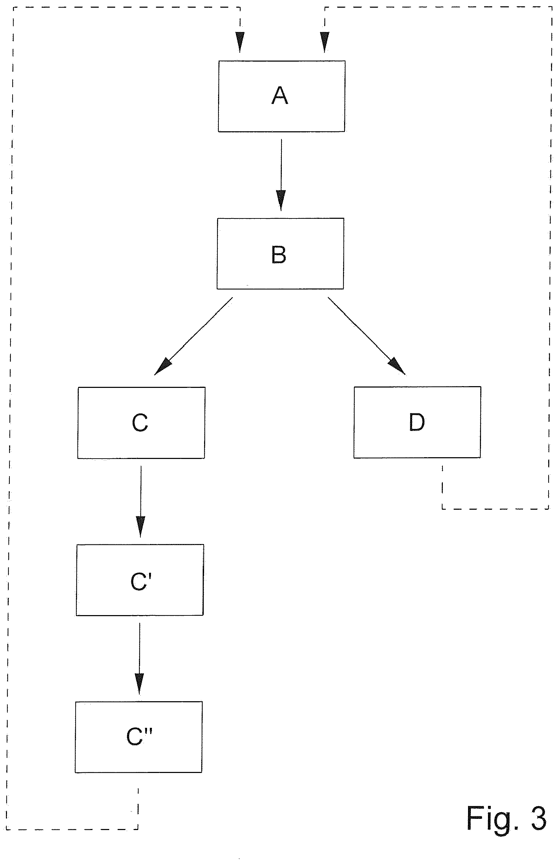

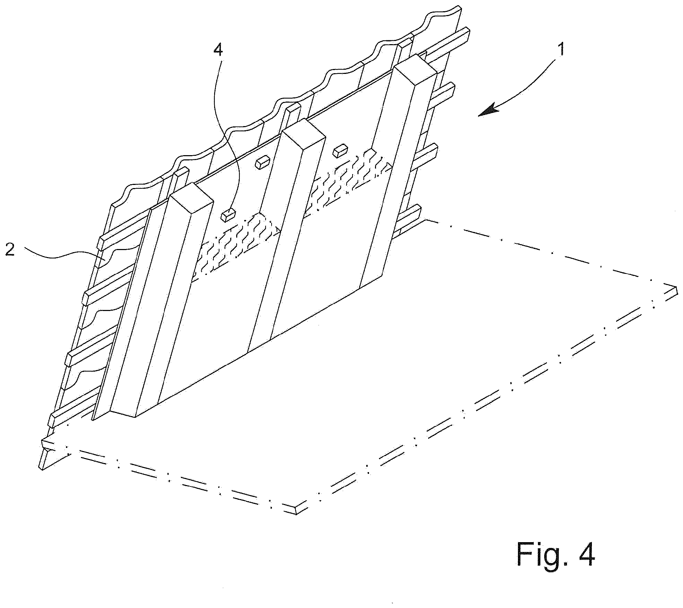

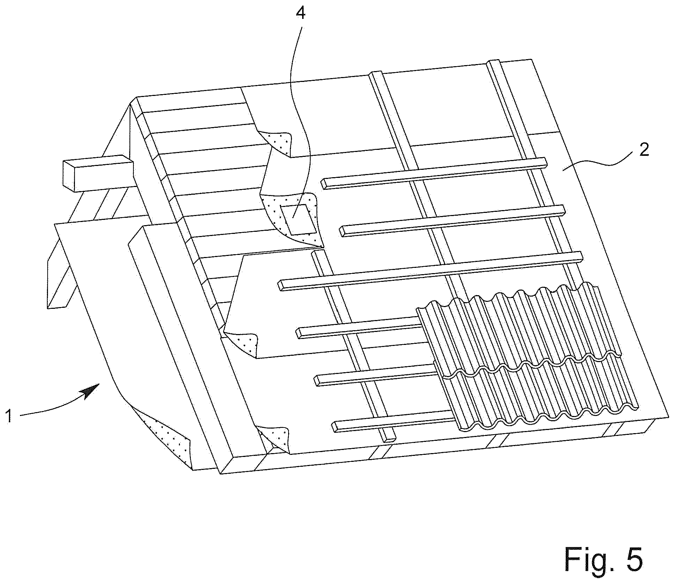

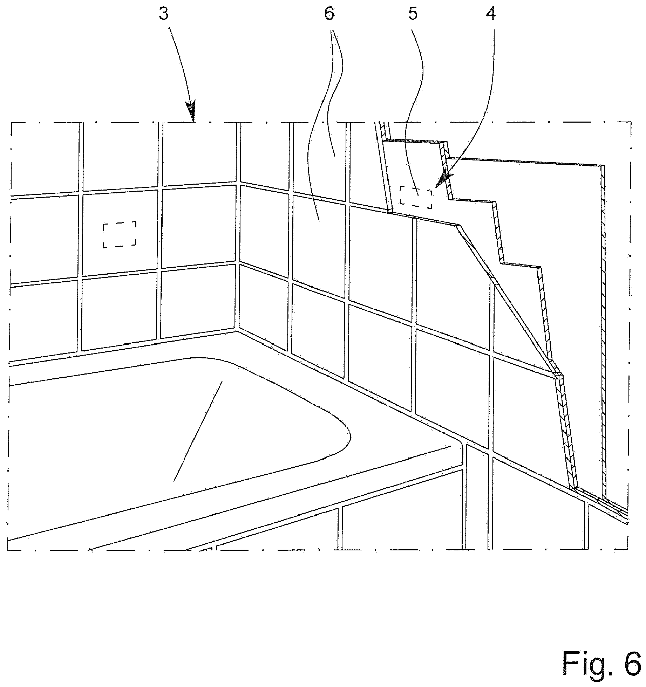

Fig. 3 zeigt einen schematischen Ablauf eines Verfahrens zur Überwachung eines Baukörpers 1. Als Baukörper 1 kann ein Dachaufbau 2, wie schematisch in den Fig. 4 und 5 dargestellt, oder eine Nasszelle 3, wie schematisch in Fig. 6 dargestellt, vorgesehen sein.

Im oder am Baukörper 1 kann eine Messeinrichtung 4 angeordnet sein, wie dies schematisch aus den Fig. 4 bis 6 ersichtlich ist. Die Messeinrichtung 4 kann zur Messung wenigstens einer Messgröße dienen. Als Messgröße kann beispielsweise im Dachaufbau 2 die Feuchtigkeit und/oder die relative Feuchtigkeit gemessen werden.

In Fig. 6 ist dargestellt, dass die Messeinrichtung 4 einen Feuchtesensor 5 aufweist, der beispielsweise hinter Fliesen 6 angeordnet ist und somit nicht von außen in der Nasszelle 3 ersichtlich und/oder ohne weiteres zugänglich ist.

In weiteren Ausführungsformen kann als von der Messeinrichtung 4 gemessene Messgröße auch eine Temperatur, ein Druck oder eine weitere chemische und/oder physikalische Eigenschaft dienen. Die Messgröße gibt insbesondere Aufschluss über den Zustand des Baukörpers 1. Erfasst beispielsweise die in den Fig. 4 bis 6 dargestellte Messeinrichtung 4 Feuchtigkeit, so kann rechtzeitig angezeigt werden, dass ein Wasserschaden droht und ein Leck bzw. eine Undichtigkeit in dem Dachaufbau 2 oder in der Nasszelle 3 vorhanden ist.

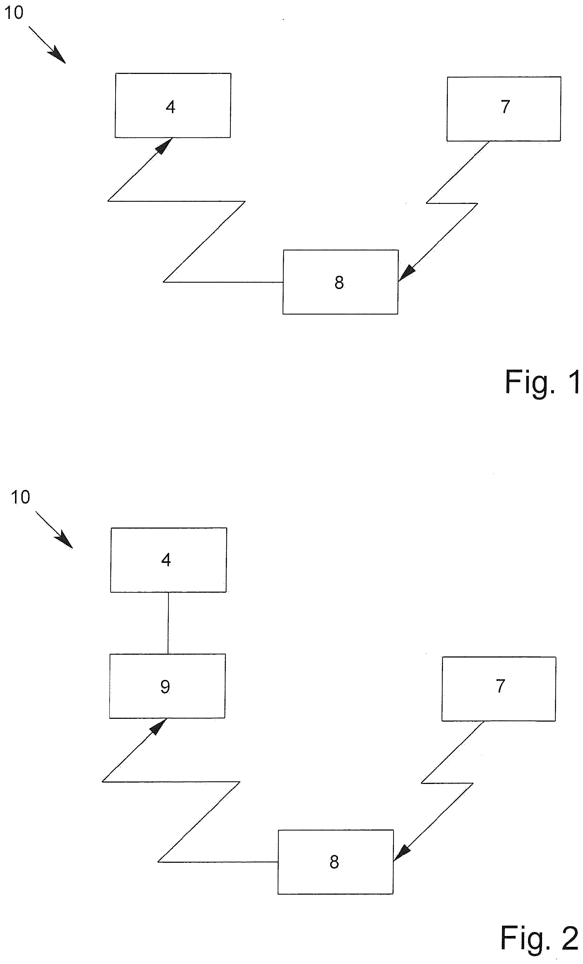

In dem in Fig. 3 dargestellten Verfahrensablauf ist zunächst im Schritt A vorgesehen, dass eine Überwachungseinrichtung 7 wenigstens eine Überwachungsgröße überwacht. Die Überwachungseinrichtung 7 ist schematisch in den Fig. 1 und 2 dargestellt. In Schritt B ist vorgesehen, dass die von der Überwachungseinrichtung 7 erfasste, insbesondere empfangene und/oder gemessene und/oder berechnete, Überwachungsgröße verarbeitet wird, so dass eine Überprüfung stattfindet, ob die erfasste Überwachungsgröße einer vorgegebenen Überwachungsgröße entspricht. Ist dies nicht der Fall, wird nach dem Schritt D das Verfahren beendet und gegebenenfalls wieder eingeleitet, wenn erneut eine Überwachungsgröße empfangen bzw. erfasst wird. Die Messeinrichtung 4 ist insbesondere in den Schritten A, B und D zur Messung der wenigstens einen Messgröße deaktiviert.

Sollte jedoch die Überprüfung im Schritt B ergeben, dass die von der Überwachungseinrichtung 7 erfasste Überwachungsgröße einer vorgegebenen Überwachungsgröße entspricht, so erfolgt eine Aktivierung der Messeinrichtung 4, die im Schritt C vorgenommen wird. Im Schritt C' erfolgt anschließend eine Messung der wenigstens einen Messgröße durch die Messeinrichtung 4 für einen vorgegebenen Zeitrahmen. Nach dem vorgegebenen Zeitrahmen wird die Messeinrichtung 4 im Schritt C" wieder deaktiviert und das Verfahren kann gegebenenfalls erneut beginnen, sofern die Überwachungseinrichtung 7 erneut eine Überwachungsgröße empfängt bzw. erfasst.

Nicht dargestellt ist, dass bei Erfassung einer vorgegebenen Überwachungsgröße die Messeinrichtung 4 von einem ersten Systemmodus in einen weiteren sich von dem ersten Systemmodus unterscheidenden Systemmodus überführt wird. Dabei kann in dem ersten und den weiteren Systemmodus wenigstens eine Messung der wenigstens einen Messgröße mittels der Messeinrichtung 4 für einen vorgegebenen Zeitraum durchgeführt werden, wobei sich der erste Systemmodus von dem weiteren Systemmodus durch eine unterschiedliche Anzahl durchzuführender Messungen der wenigstens einen Messgröße in einem gleichen Zeitintervall und/oder durch unterschiedliche Zeiträume für die jeweils durchzuführenden Messungen der wenigstens einen Messgröße und/oder durch unterschiedliche vorgegebene Messzeitpunkte für die Messung der wenigstens einen Messgröße in einem gleichen Zeitintervall unterscheidet.

In der Fig. 1 ist schematisch dargestellt, dass die Überwachungseinrichtung 7 zumindest mittelbar mit der Messeinrichtung 4 gekoppelt ist. Beispielsweise kann die Überwachungseinrichtung 7 die erfasste Überwachungsgröße an eine Steuereinrichtung 8 übertragen. In der Steuereinrichtung 8 kann eine Überprüfung der Überwachungsgröße vorgenommen werden. Alternativ oder zusätzlich kann jedenfalls vorgesehen sein, dass die Steuereinrichtung 8 zur Aktivierung der Messeinrichtung 4 ausgebildet ist.

Die Überwachungsgröße kann innere und/oder äußere Umgebungsparameter des Baukörpers 1 angeben. Beispielsweise kann als Überwachungsgröße eine Temperatur, eine Feuchtigkeit oder dergleichen dienen. Die Überwachungsgröße kann auch ein Aktivierungssignal enthalten, so dass keine Auswertung bzw. Verarbeitung der Überwachungsgröße erfolgen muss, sondern bereits das Empfangen der Überwachungsgröße von der Überwachungseinrichtung 7 zur Aktivierung der Messeinrichtung 4 führt.

Die vorgegebene Überwachungsgröße kann in weiteren Ausführungsformen, insbesondere von der Steuereinrichtung 8, durch Abgleich mit einem Überwachungsgrenzwert ermittelt werden. Liegt beispielsweise die von der Überwachungseinrichtung 7 erfasste Überwachungsgröße in einem bestimmten Intervall, so kann eine Aktivierung der Messeinrichtung 4 erfolgen. So kann beispielsweise bei Überschreiten und/oder Unterschreiten eines Überwachungsgrenzwertes eine Aktivierung der Messeinrichtung 4 zur Einleitung einer Messung der wenigstens einen Messgröße erfolgen.

Die Überwachungseinrichtung 7 kann im oder am Baukörper 1 angeordnet sein. Die Überwachungseinrichtung 7 kann aber auch extern angeordnet sein und letztlich indirekt zur Steuerung der Messeinrichtung 4 dienen.

In Fig. 2 ist dargestellt, dass eine Energieversorgungseinrichtung 9 zur Energieversorgung der Messeinrichtung 4 vorgesehen ist. Die Messeinrichtung 4 kann als passive Messeinrichtung 4 ausgebildet sein, die für die Durchführung der Messung der wenigstens einen Messgröße von außen zugeführte elektrische Energie benötigt. Durch Energieversorgung mittels der Energieversorgungseinrichtung 9 kann eine Aktivierung der Messeinrichtung 4 erfolgen. Entsprechend kann durch eine Beendigung der Energieversorgung auch eine Deaktivierung der Messeinrichtung 4 eingeleitet werden.

Die Überwachungseinrichtung 7 ist in dem in Fig. 2 dargestellten Ausführungsbeispiel mit der Energieversorgungseinrichtung 9 derart gekoppelt, so dass die Überwachungseinrichtung 7 - zumindest mittelbar - über die Energieversorgungseinrichtung 9 die Messeinrichtung 4 aktiviert und/oder deaktiviert. In dem in Fig. 2 dargestellten Ausführungsbeispiel ist vorgesehen, dass die Überwachungseinrichtung 7 die wenigstens eine erfasste Überwachungsgröße an eine Steuereinrichtung 8 überträgt, die diese Überwachungsgröße auswertet und insbesondere überprüft, ob die erfasste Überwachungsgröße einer vorgegebenen Überwachungsgröße entspricht. Ist dies der Fall, steuert die Steuereinrichtung 8 die Energieversorgungseinrichtung 9 derart an, dass zur Messung der wenigstens einen Messgröße eine Energieversorgung der Messeinrichtung 4 startet.

Nicht dargestellt ist, dass die Überwachungseinrichtung 7 zumindest im Wesentlichen unmittelbar mit der Energieversorgungseinrichtung 9 und/oder der Messeinrichtung 4 gekoppelt ist, so dass insbesondere über die Überwachungseinrichtung 7 eine Steuerung der Messeinrichtung 4 erfolgen kann.

Die in Fig. 3 im Schritt C' durchgeführte Messung der wenigstens einen Messgröße durch die Messeinrichtung 4 kann zum einen unmittelbar nach der Feststellung, dass die vorgegebene Überwachungsgröße erfasst worden ist (also nach dem Schritt C) oder mit einem Zeitversatz durchgeführt werden. Der Zeitversatz, insbesondere zwischen den Schritten C und C', kann insbesondere von der vorgegebenen Überwachungsgröße, der Überwachungseinrichtung 7, der Messeinrichtung 4, der Steuereinrichtung 8 und/oder der Energieversorgungseinrichtung 9 vorgegeben werden und wenige Minuten (bspw. größer 1 Minute) bis mehrere Stunden (bspw. 8 Stunden) betragen.

Die Messeinrichtung 4 wird nach Überschreiten des vorgegebenen Zeitraums - in dem in Fig. 3 dargestellten Ausführungsbeispiel - im Schritt C" wieder deaktiviert, so dass keine Messung der wenigstens einen Messgröße erfolgt.

Wie zuvor ausgeführt, kann der vorgegebene Zeitraum zur Aktivierung der Messeinrichtung 4 durch in der Überwachungseinrichtung 7 hinterlegte Vorgaben bestimmt und/oder festgelegt werden. Auch kann der vorgegebene Zeitraum bei unterschiedlichen Messungen der Messeinrichtung 4 variieren.

Weiter ist nicht dargestellt, dass eine Berechnung der Überwachungsgröße von der Überwachungseinrichtung 7 mittels Algorithmen, insbesondere selbstlernende Algorithmen und/oder auf künstlicher Intelligenz basierender Algorithmen, durchgeführt wird.

So ist insbesondere nicht dargestellt, dass das Verfahren optimierbar ist, insbesondere durch einen in der Steuerungseinrichtung 8, der Energieversorgungseinrichtung 9, der Messeinrichtung 4 und/oder in der Überwachungseinrichtung 7 hinterlegten selbstlernenden Algorithmus bzw. eine Einrichtung mit künstlicher Intelligenz. So kann insbesondere eine Anpassung des vorgegebenen Zeitraums zur Messung, des Zeitversatzes und/oder der vorgegebenen Überwachungsgröße erfolgen, insbesondere in Abhängigkeit der in dem vorgegebenen Zeitraum erfassten Messdaten der Messeinrichtung 4.

Diese von der Messeinrichtung 4 erfassten Messdaten können insbesondere in einer nicht näher dargestellten Verarbeitungseinrichtung verarbeitet und/oder gespeichert werden.

Ebenfalls nicht dargestellt ist, dass die Verarbeitungseinrichtung auch mit einer Alarmeinrichtung gekoppelt sein kann, so dass bei Erreichen von kritischen Werten der von der Messeinrichtung 4 erfassten Messdaten eine, insbesondere optische und/oder akustische, Alarmgebung erfolgt. Die Alarmgebung kann auch durch ein elektronisches Alarmsignal an eine Meldestation erfolgen. Beispielsweise kann dies vorgesehen sein, wenn die Messeinrichtung 4 im Baukörper 1 Feuchtigkeit detektiert, die nicht mehr in einem tolerierbaren bzw. akzeptablen Rahmen liegt. Die Auswertung der von der Messeinrichtung 4 erfassten Messdaten kann entsprechend im Stand der Technik bekannter Verarbeitungsvorgaben erfolgen.

Wie zuvor erläutert, kann die Messeinrichtung 4, insbesondere über die Energieversorgungseinrichtung 9, deaktiviert werden. Eine solche Deaktivierung kann beispielsweise nach Überschreiten des vorgegebenen Zeitraums erfolgen. Alternativ oder zusätzlich kann auch vorgesehen sein, dass die in Fig. 3 im Schritt C" durchgeführte Deaktivierung nach Empfangen eines Deaktivierungssignals von der Überwachungseinrichtung 7 durchgeführt wird. Beispielsweise kann ein Deaktivierungsgrenzwert festgelegt werden, so dass insbesondere dann, wenn die von der Überwachungseinrichtung 7 insbesondere innerhalb des vorgegebenen Zeitraums zur Messung der wenigstens einen Messgröße erfasste Überwachungsgröße einen Deaktivierungsgrenzwert überschreitet und/oder unterschreitet, die Messeinrichtung 4 deaktiviert wird. Somit kann neben der Aktivierung auch die Deaktivierung der Messeinrichtung 4 über die erfasste Überwachungsgröße eingeleitet werden. Somit kann nach Erfassung einer vorgegebenen Deaktivierungs-Überwachungsgröße eine Deaktivierung der Messeinrichtung 4 durchgeführt werden.

Nicht dargestellt ist, dass die Messeinrichtung 4 die Überwachungsgröße an die Überwachungseinrichtung 7 übermittelt. Dabei kann die Messeinrichtung 4 Bestandteil der Überwachungseinrichtung 7 sein oder vice versa.

Nicht näher dargestellt ist, dass die Messeinrichtung 4 und/oder die Überwachungseinrichtung 7 als Überwachungsgröße mittels wenigstens eines Temperatursensors eine Temperatur misst. Beispielsweise kann der Temperatursensor am Dachaufbau 2 oder an der Nasszelle 3 angeordnet sein.

Ferner kann die, insbesondere im Dachbereich bzw. im Dachaufbau 2 und/oder in der Nasszelle 3 angeordnete, Überwachungseinrichtung 7 wenigstens eine physikalische und/oder chemische Überwachungsgröße überwachen, vorzugsweise messen. Als Überwachungseinrichtung 7 kann auch ein Wetterradar oder eine Wetterstation vorgesehen sein oder eine Wetterstation oder ein Wetterradar überträgt die Überwachungsgröße an die Überwachungseinrichtung 7. Alternativ oder zusätzlich kann vorgesehen sein, dass die Überwachungseinrichtung 7 ein Messmittel zur Messung eines Wasserdrucks und/oder eines Durchflusses, beispielsweise eine Wasseruhr, aufweist.

Insbesondere kann vorgesehen sein, dass als Überwachungsgröße eine Temperatur, ein Wasserverbrauch, ein Druck, insbesondere Wasserdruck, und/oder eine Feuchtigkeit genutzt wird.

Die Fig. 1 und 2 zeigen ein System 10, das zur Überwachung eine Baukörpers 1 dient. Als Baukörper 1 kann ein Dachaufbau 2 oder eine Nasszelle 3 vorgesehen sein. Das System 10 ist insbesondere zur Durchführung eines Verfahrens nach wenigstens einer der vorhergehenden Ausführungsformen ausgebildet. Das System 10 weist eine Messeinrichtung 4 zur Messung wenigstens einer Messgröße auf. Die Messgröße kann insbesondere den Zustand des Baukörpers 1 charakterisieren. Beispielsweise kann als Messeinrichtung 4 ein Feuchtesensor 5 dienen, wie schematisch in Fig. 6 dargestellt ist.

Das System 10 weist eine Überwachungseinrichtung 7 zur Überwachung, insbesondere zur Messung und/oder zum Empfangen, wenigstens einer Überwachungsgröße auf. Als Überwachungsgröße können unterschiedliche innere und/oder äußere Umgebungsparameter des Baukörpers 1, wie beispielsweise eine Temperatur, genutzt werden. In Abhängigkeit der Überwachungsgröße kann insbesondere eine Messung der wenigstens einen Messgröße durch die Messeinrichtung 4 erfolgen. Das System 10 weist ferner eine Steuereinrichtung 8 auf, wie dies schematisch in den Fig. 1 und 2 dargestellt ist, die zur Aktivierung der Messeinrichtung 4 für einen vorgegebenen Zeitraum und/ oder zur Überführung der Messeinrichtung von einem ersten Systemmodus in einen sich von dem ersten Systemmodus unterscheidenden weiteren Systemmodus ausgebildet ist.

Die Steuereinrichtung 8 kann dabei ferner derart ausgebildet sein, dass die Messeinrichtung 4 nach Erfassung einer vorgegebenen Überwachungsgröße aktiviert wird. Alternativ oder zusätzlich kann die Steuereinrichtung 8 derart ausgebildet sein, dass die Messeinrichtung 4 nach Erfassung einer vorgebenden Überwachungsgröße von dem ersten Systemmodus in den weiteren Systemmodus überführt wird.

Ob eine vorgegebene Überwachungsgröße auch von der Überwachungseinrichtung 7 erfasst wird, kann insbesondere durch eine Verarbeitung der Überwachungsgröße erfolgen, die entweder in der Überwachungseinrichtung 7 oder in der Steuereinrichtung 8 durchgeführt wird.

Insbesondere kann die Steuereinrichtung 8 zum Abgleich der von der Überwachungseinrichtung 7 erfassten Überwachungsgröße und der vorgegebenen Überwachungsgröße ausgebildet sein. So kann die Steuereinrichtung 8 insbesondere feststellen, ob eine Aktivierung der Messeinrichtung 4 eingeleitet werden soll. Die Steuereinrichtung 8 kann zudem derart ausgebildet sein, dass die von der Überwachungseinrichtung 7 erfasste Überwachungsgröße mit einem Überwachungsgrenzwert verglichen wird, so dass eine Überprüfung auf die vorgegebene Überwachungsgröße erfolgt.

In Fig. 2 ist dargestellt, dass eine Energieversorgungseinrichtung 9, die beispielsweise als Akkumulator ausgebildet sein kann, zur Versorgung der Messeinrichtung 4 mit elektrischer Energie vorgesehen ist. Die Steuereinrichtung 8 kann mit der Energieversorgungseinrichtung 9 derart gekoppelt sein, dass die von der Steuereinrichtung 8 vorgegebenen Aktivierung der Messeinrichtung 4 über die Energieversorgungseinrichtung 9 erfolgt. Die Messeinrichtung 4 kann in diesem Zusammenhang als passive Messeinrichtung 4 ausgebildet sein, der zur Durchführung der Messung der wenigstens einen Messgröße von außen elektrische Energie zugeführt werden muss. So kann eine Deaktivierung und Aktivierung über die Energieversorgungseinrichtung 9 erfolgen.

Die Überwachungseinrichtung 7 kann in weiteren Ausführungsformen einen Temperatursensor, einen Regensensor, einen Feuchtesensor, einen Drucksensor, insbesondere einen Wasserdrucksensor, und/oder einen Durchflussmesser zur Ermittlung der Überwachungsgröße aufweisen. Auch kann die Überwachungseinrichtung 7 derart ausgebildet sein, dass sie eine Wetterstation umfasst und/oder Daten eines Wetterradars und/oder einer Wetterstation empfangen kann, die insbesondere zur Vorhersage eines kritischen Ereignisses, wie eines Sturms, Regenschauers oder dergleichen, dienen können - was wiederum zur Aktivierung der Messeinrichtung 4 genutzt werden kann.

Nicht dargestellt ist, dass die Überwachungseinrichtung 7 eine Schnittstelle, insbesondere eine Internet-Schnittstelle, zum Empfangen der Überwachungsgröße aufweist. Die Schnittstelle kann insbesondere zum Empfangen von Daten aus dem Internet ausgebildet sein, die beispielsweise ein kritisches Ereignis charakterisieren können und/oder Daten zum Wetter oder zu äußeren Umgebungsparametern enthalten.

### Bezugszeichenliste:

1 Baukörper
2 Dachaufbau
3 Nasszelle
4 Messeinrichtung
5 Feuchtesensor
6 Fliesen
7 Überwachungseinrichtung
8 Steuereinrichtung
9 Energieversorgungseinrichtung
10 System

## Patentansprüche

1. Verfahren zur Überwachung eines Baukörpers (1), vorzugsweise eines Dachaufbaus (2) oder einer Nasszelle (3), mittels einer Messeinrichtung (4) zur Messung wenigstens einer Messgröße,
**dadurch gekennzeichnet,**
**dass** eine Überwachungseinrichtung (7) wenigstens eine Überwachungsgröße überwacht, insbesondere empfängt und/oder misst und/oder berechnet, und
**dass** bei Erfassung einer vorgegebenen Überwachungsgröße die Messeinrichtung (4) für einen vorgegebenen Zeitraum aktiviert und/oder von einem ersten Systemmodus in einen sich von dem ersten Systemmodus unterscheidenden weiteren Systemmodus überführt wird, insbesondere wobei die Messeinrichtung (4) außerhalb des vorgegebenen Zeitraums deaktiviert ist.

2. Verfahren nach Anspruch 1, **dadurch gekennzeichnet, dass** in dem ersten und den weiteren Systemmodus wenigstens eine Messung der wenigstens einen Messgröße mittels der Messeinrichtung (4) für einen vorgegebenen Zeitraum durchgeführt wird, wobei sich der erste Systemmodus von dem weiteren Systemmodus durch eine unterschiedliche Anzahl durchzuführender Messungen der wenigstens einen Messgröße in einem gleichen Zeitintervall und/oder durch unterschiedliche Zeiträume für die jeweils durchzuführenden Messungen der wenigstens einen Messgröße und/oder durch unterschiedliche vorgegebene Messzeitpunkte für die Messung der wenigstens einen Messgröße in einem gleichen Zeitintervall unterscheidet.

3. Verfahren nach Anspruch 1 oder 2, **dadurch gekennzeichnet, dass** die vorgegebene Überwachungsgröße durch Abgleich mit einem Überwachungsgrenzwert ermittelt wird und/oder dass eine Berechnung der Überwachungsgröße von der Überwachungseinrichtung (7) mittels Algorithmen, insbesondere selbstlernende Algorithmen und/oder auf künstlicher Intelligenz basierender Algorithmen, durchgeführt wird.

4. Verfahren nach einem der vorhergehenden Ansprüche, **dadurch gekennzeichnet, dass** die Messeinrichtung (4) zur Messung der wenigstens einen Messgröße von einer Energieversorgungseinrichtung (9) mit elektrischer Energie versorgt wird
und/oder dass die Überwachungseinrichtung (7) mit der Energieversorgungseinrichtung (9) gekoppelt ist, so dass über die Energieversorgungseinrichtung (9) die Messeinrichtung (4) aktiviert und/oder deaktiviert wird.

5. Verfahren nach einem der vorhergehenden Ansprüche, **dadurch gekennzeichnet, dass** die Messeinrichtung (4), insbesondere über die Energieversorgungseinrichtung (9), zumindest im Wesentlichen unmittelbar oder mit einem Zeitversatz nach Erfassung der vorgegebenen Überwachungsgröße aktiviert wird.

6. Verfahren nach einem der vorhergehenden Ansprüche, **dadurch gekennzeichnet, dass** die Messeinrichtung (4), insbesondere über die Energieversorgungseinrichtung (9) nach Überschreiten des vorgegebenen Zeitraums deaktiviert wird.

7. Verfahren nach einem der vorhergehenden Ansprüche, **dadurch gekennzeichnet, dass** der vorgegebene Zeitraum zur Aktivierung der Messeinrichtung (4) durch in der Überwachungseinrichtung (7) hinterlegte Vorgaben bestimmt wird und/oder von der vorgegebenen Überwachungsgröße festgelegt wird.

8. Verfahren nach einem der vorhergehenden Ansprüche, **dadurch gekennzeichnet, dass** die Überwachungsgröße von der Messeinrichtung (4) an die Überwachungseinrichtung (7) übermittelt wird.

9. Verfahren nach einem der vorhergehenden Ansprüche, **dadurch gekennzeichnet, dass** die Messeinrichtung (4) und/oder die Überwachungseinrichtung (7) als Überwachungsgröße mittels wenigstens eines Temperatursensors eine Temperatur misst.

10. Verfahren nach einem der vorhergehenden Ansprüche, **dadurch gekennzeichnet, dass** die, insbesondere im Dachaufbau (2) und/oder in der Nasszelle (3) angeordnete, Überwachungseinrichtung (7) wenigstens eine physikalische und/oder chemische Überwachungsgröße überwacht, vorzugsweise misst.

11. Verfahren nach einem der vorhergehenden Ansprüche, **dadurch gekennzeichnet, dass** als Überwachungsgröße eine Temperatur, ein Wasserverbrauch, ein Druck, insbesondere Wasserdruck, und/oder eine Feuchtigkeit genutzt wird.

12. System (10) zur Überwachung eines Baukörpers (1), vorzugsweise eines Dachaufbaus (2) oder einer Nasszelle (3), vorzugsweise zur Durchführung eines Verfahrens nach einem der vorhergehenden Ansprüche, mit einer Messeinrichtung (4) zur Messung wenigstens einer Messgröße,
**dadurch gekennzeichnet,**
**dass** eine Überwachungseinrichtung (7) zur Überwachung, insbesondere zur Messung und/oder zum Empfang, wenigstens einer Überwachungsgröße vorgesehen ist,
**dass** eine Steuereinrichtung (8) des Systems (10) zur Aktivierung der Messeinrichtung (4) für einen vorgegebenen Zeitraum und/ oder zur Überführung der Messeinrichtung von einem ersten Systemmodus in einen sich von dem ersten Systemmodus unterscheidenden weiteren Systemmodus ausgebildet ist, und
**dass** die Steuereinrichtung (8) derart ausgebildet und mit der Messeinrichtung (4) und/oder der Überwachungseinrichtung (7) gekoppelt ist, dass die Messeinrichtung (4) nach Erfassung einer vorgegebenen Überwachungsgröße aktiviert wird und/oder von dem ersten Systemmodus in den weiteren Systemmodus überführt wird.

13. System nach Anspruch 12, **dadurch gekennzeichnet, dass** die Steuereinrichtung (8) zum Abgleich der von der Überwachungseinrichtung (7) erfassten Überwachungsgröße und der vorgegebenen Überwachungsgröße ausgebildet ist, insbesondere wobei die Steuereinrichtung (8) derart ausgebildet ist, dass die von der Überwachungseinrichtung (7) erfasste Überwachungsgröße mit einem Überwachungsgrenzwert verglichen wird, so dass eine Überprüfung auf die vorgegebene Überwachungsgröße erfolgt.

14. System nach Anspruch 12 oder 13, **dadurch gekennzeichnet, dass** eine Energieversorgungseinrichtung (9) zur Versorgung der Messeinrichtung (4) mit elektrischer Energie vorgesehen ist und/oder dass die Steuereinrichtung (8) mit der Energieversorgungseinrichtung (9) derart gekoppelt ist, dass die von der Steuereinrichtung (8) vorgegebene Aktivierung der Messeinrichtung (4) über die Energieversorgungseinrichtung (9) erfolgt.

15. System nach einem der vorhergehenden Ansprüche, **dadurch gekennzeichnet, dass** die Überwachungseinrichtung (7) einen Temperatursensor, Regensensor,
Feuchtesensor (5), Drucksensor, insbesondere Wasserdrucksensor, und/oder Durchflussmesser zur Ermittlung der Überwachungsgröße aufweist und/oder dass die Überwachungseinrichtung (7) eine Schnittstelle, insbesondere eine Internet-Schnittstelle, zum Empfang der Überwachungsgröße aufweist und/oder dass die Messeinrichtung (4) einen Feuchtesensor (5) aufweist.
